(19) Europäisches Patentamt / European Patent Office / Office européen des brevets

(11) **EP 2 461 947 B1**

(12) **EUROPEAN PATENT SPECIFICATION**

(45) Date of publication and mention
of the grant of the patent:
**04.10.2017 Bulletin 2017/40**

(21) Application number: **10754565.9**

(22) Date of filing: **04.08.2010**

(51) Int Cl.:
*B25H 1/00* *(2006.01)*        *B23Q 1/00* *(2006.01)*
*B23Q 1/01* *(2006.01)*        *B25J 5/00* *(2006.01)*
*B25J 9/02* *(2006.01)*

(86) International application number:
**PCT/IB2010/053529**

(87) International publication number:
**WO 2011/015996 (10.02.2011 Gazette 2011/06)**

(54) **EQUIPMENT AND METHOD FOR MECHANICAL WORKING**

VORRICHTUNG UND VERFAHREN ZUR MECHANISCHEN BEARBEITUNG

ÉQUIPEMENT ET PROCÉDÉ POUR LE TRAVAIL MÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **05.08.2009 IT TO20090613**

(43) Date of publication of application:
**13.06.2012 Bulletin 2012/24**

(73) Proprietor: **Bisiach & Carrù S.p.A.
10078 Venaria Reale (TO) (IT)**

(72) Inventor: **BISIACH, Bruno
I-10078 Venaria (TO) (IT)**

(74) Representative: **Robba, Pierpaolo
Interpatent S.R.L.
Via Caboto, 35
10129 Torino (IT)**

(56) References cited:
**EP-A1- 2 017 024        EP-A2- 1 724 652
DE-A1- 10 335 568        US-A- 4 536 690
US-A- 4 887 016          US-A- 5 775 750**

## Description

*Technical field*

The present invention concerns an equipment and a method for mechanical working that can be used for instance, but not exclusively, for working large-sized pieces, such as aircraft parts. Such a method and such equipment for mechanical working according to the preamble of claim 1 is known from US4887016.

*Prior art*

Working of large-sized pieces, for instance with a size of the order of some metres and even some ten metres, generally provides for keeping the workpiece stationary and moving the machines performing the different working operations.

In particular, in aeronautical and railway fields, it is presently known to work a piece, kept stationary, by means of one or more anthropomorphic robots mounted on remote-controlled trolleys (AGV) that can be moved relative to the piece.

Such a solution is however inadequate to perform particular working operations, such as peripheral milling or working operations requiring high-precision assembling of parts.

It is an object of the present invention to provide an equipment and a method for mechanical working that allow obviating such drawbacks.

It is another object of the present invention to provide an equipment and a method of the above kind that can be industrially used with limited costs.

*Description of the Invention*

The above and other objects are achieved thanks to a working equipment and a relevant working method as claimed in the appended claims.

According to the present invention, the mechanical manipulator comprises one or more sliding rams arranged to move the working head by means of their sliding movements. Advantageously, the sliding ram construction makes the manipulator very solid and rigid from the structural standpoint, and thus capable of keeping the working head very firmly and precisely positioned even when considerable reaction forces and vibrations are generated during working, for instance during a boring operation.

Advantageously, moreover, the sliding ram construction allows manufacturing mechanical manipulators that generally are scarcely deformable.

*Brief Description of the Drawings*

Further advantages that can be attained with the present invention will become more apparent, for the skilled in the art, from the following description of some non-limiting exemplary embodiments, given with reference to the following schematic Figures:

- Fig. 1 is a perspective view of a movable working unit according to a first embodiment of the present invention;
- Fig. 2 is a perspective view of a piece holding jig and a workshop anchorage according to the embodiment shown in Fig. 1;
- Fig. 3 is a perspective view of a detail of the movable unit shown in Fig. 1 secured to the workshop anchorage shown in Fig. 2;
- Figs. 4A - 4C are side views, relevant to an equal number of instants, showing the handling trolley of the movable working unit shown in Fig. 1 while passing an obstacle on the workshop floor;
- Fig. 5 is a perspective view of the movable working unit shown in Fig. 1 with the bumper inflated;
- Fig. 6 is a cross-sectional view of the sliding guide shown in Fig. 2;
- Fig. 7 is a perspective view of an area of the workshop where a working operation according to the present invention is being performed;
- Fig. 8 is a perspective view of a detail of the trolley moving the movable working unit shown in Fig. 1;
- Fig. 9 is a perspective view of a manually-driven tractor for moving the movable working unit shown in Fig. 1;
- Fig. 10 is a perspective view of a movable working unit according to a second embodiment of the present invention.

*Description of a Preferred Embodiment*

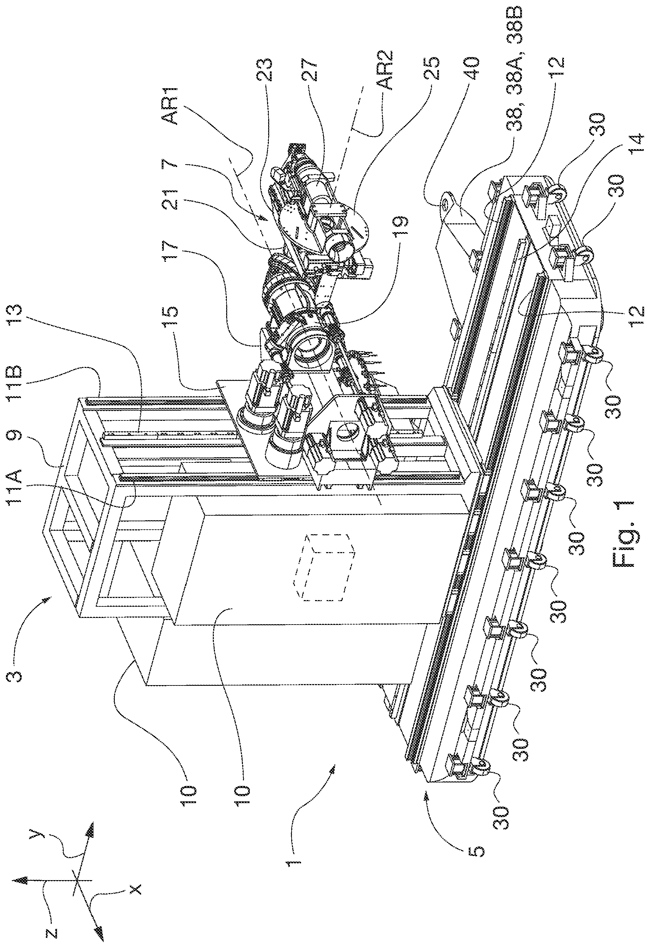

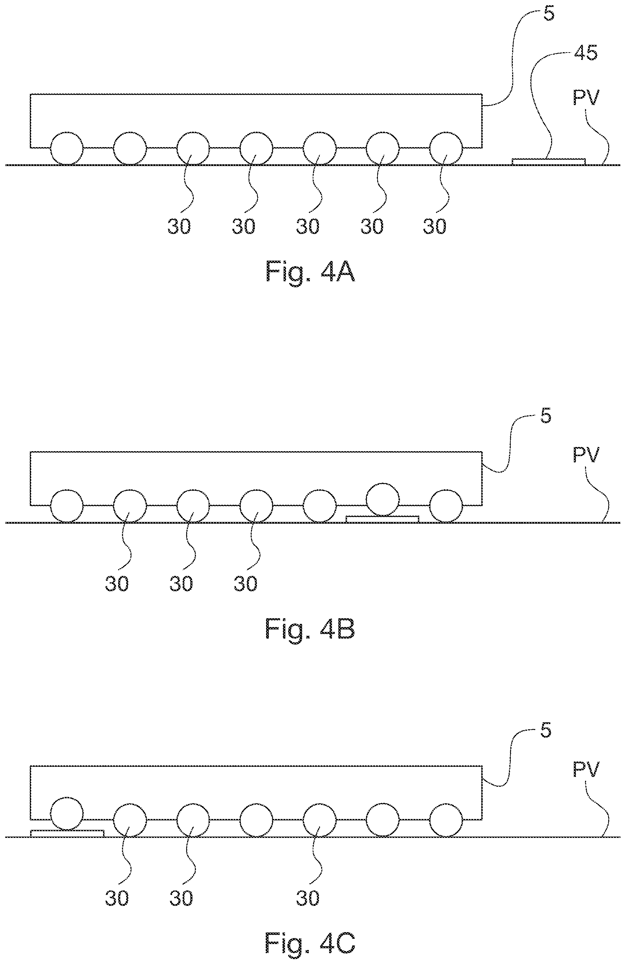

Referring to Figs. 1 to 9, reference numeral 1 generally denotes a movable working unit. Such a movable unit 1 comprises a mechanical manipulator 3 and a handling trolley 5 on which manipulator 3 is mounted and is moved, as it will be disclosed in more detail hereinafter. A head 7, for instance arranged to bore or rivet a piece, is mounted on manipulator 3. Such a head 7 may be as disclosed in EP-A-1884313.

In this embodiment, manipulator 3 includes a frame 9, e.g. a metal frame forming a trellis structure and mounted on a pair of horizontal guides 12. The horizontal sliding (Y direction in Fig. 1) of frame 9 on guides 12 is driven by a pinion-rack system, known per se, of which rack 14 is shown. Frame 9 itself forms therefore a first ram sliding on guides 12.

Two vertical sliding guides 11A, 11B and a rack 13 are mounted on frame 9. A second ram 15 is slidably mounted on guides 11A, 11B. The vertical sliding (along axis Z of Fig. 1) of ram 15 is driven by a pinion-rack system, of which rack 13 is part.

A third ram 17 is mounted on ram 15 so as to be horizontally slidable. A drum 19 is mounted on ram 17 so as to be rotatable about a horizontal axis AR1 parallel to axis X.

A platform 23 is associated, through an articulated joint 21, with the end of drum 19. A rotating table 25 is in turn mounted on platform 23 and is rotatable about an axis AR2 perpendicular, or generally transversal, to rotation axis AR1, and hence parallel to axis Y. Articulated joint 21 allows varying the inclination of platform 23 and rotation axis AR2 relative to axis AR1. Lastly, a rotating spindle 27, capable of performing boring or milling operations, depending on the tool being used, is mounted on rotating table 25. Of course, other working heads can be mounted on rotating table 25 in alternative or in addition to boring head 27: for instance, riveting heads, compressed-air guns or measuring heads can be mounted.

The just-described sliding ram construction of mechanical manipulator 3 makes the latter very solid and rigid from the structural standpoint, and thus capable of keeping working head 7 very firmly and precisely positioned even during working operations, for instance boring operations, in which considerable reaction forces and vibrations are generated.

The sliding ram construction further allows constructing mechanical manipulators that generally are less deformable than the so-called anthropomorphic robots, with a resulting advantageous improvement in working precision.

In other embodiments, not shown, the rams of the mechanical manipulator can be driven even by other kinds of mechanisms, such as ball screw systems or linear motors.

Handling trolley 5 has further associated therewith electric cabinets 10, partly inserted into frame 9 and containing electric and electronic circuits for managing the electric and pneumatic power systems of movable unit 1, as well as a logic unit controlling, among other things, the operation of manipulator 3 and in particular of working head 7.

Movable working unit 1 is moreover equipped with fast connectors for the fast connection of the electric and fluidic circuits on board unit 1 to the workshop networks for the distribution of power, compressed air, vacuum and possibly other fluids.

Preferably, electric cabinets 10 also enclose a no-break power supply unit in order to ensure the power supply at least to the logic unit during displacements from a workshop area to another, that is when movable working unit 1 is disconnected from said electric and fluidic supply networks of the workshop.

Movable working unit 1 is further equipped with a lung for maintaining its on-board compressed-air circuit under pressure when the unit is disconnected from the compressed-air network of the workshop during said displacements.

According to this embodiment of the invention, handling trolley 5 may roll on workshop floor PV by means of a plurality of idle wheels 30 pivoting about a vertical axis Z, without need of rails or other fixed runways installed on the floor. In particular, in the illustrated embodiment, rectangular trolley 5 is equipped with eighteen wheels 30, of which seven are mounted on each long side of trolley 5 and two on each short side of trolley 5. In other embodiments, not shown, wheels 30 may be replaced by other devices allowing displacing trolley 5, without thereby departing from the scope of the invention. In particular, trolley 5 could even be supported for instance by a magnetic levitation or an air cushion system.

Advantageously, a suspension equipped with a load-limiting device (not shown) is interposed between each wheel 30 and the rest of trolley 5. In the present exemplary embodiment, the suspension of each wheel 30 comprises a pneumatic cylinder 31, and the load-limiting device comprises a pressure-limiting valve.

Due to the presence of the load-limiting device, each wheel is not capable of supporting a load exceeding a suitably predetermined load threshold $P_{Lim}$, for instance 300 Kgf. This, together with the provision of a relatively high number of wheels 30, allows trolley 5 to more easily pass small irregularities and small obstacles on floor PV. Indeed, in the presence of a small obstacle, only one wheel 30, or generally a limited number of wheels 30, is subjected to a greater load: thus, thanks to the load limiting device, such wheel(s) vertically yield(s) and is (are) raised in order to pass the obstacle, and the overall weight of unit 1 is distributed on the other wheels. In this manner, damaging or anyway excessively tilting of movable unit 1 is prevented during displacements.

Handling trolley 5 preferably is equipped with 9 to 30 wheels, with a diameter of the order of 20 to 30 cm.

Load threshold value $P_{Lim}$ is determined by the following formula:

$$P_{Lim} = (P/n) * \alpha$$

where:

- P is the overall weight of unit 1,
- n is the number of wheels 30, and
- $\alpha$ is a safety factor ranging from 1 to the overall number of wheels 30.

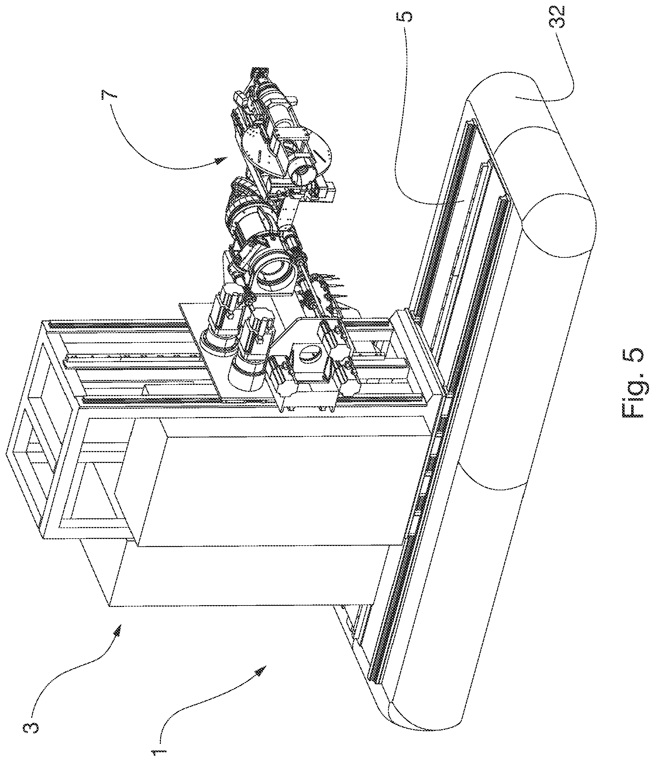

Advantageously, handling trolley 5 is equipped with a pneumatic bumper 32, shown in Fig. 5, arranged around the sides of trolley 5. Bumper 32 consists of a chamber filled with pressurised air or other gas and is to dampen hits of trolley 5 against possible obstacles, as well as to avoid damages to things or persons during trolley displacements. Advantageously, pneumatic bumper 32 is inflated when movable unit 1 is to move within the workshop, and is deflated when the unit has arrived at its destination.

In Figs. 1, 3 and 8 pneumatic bumper 32 is not shown for convenience of representation.

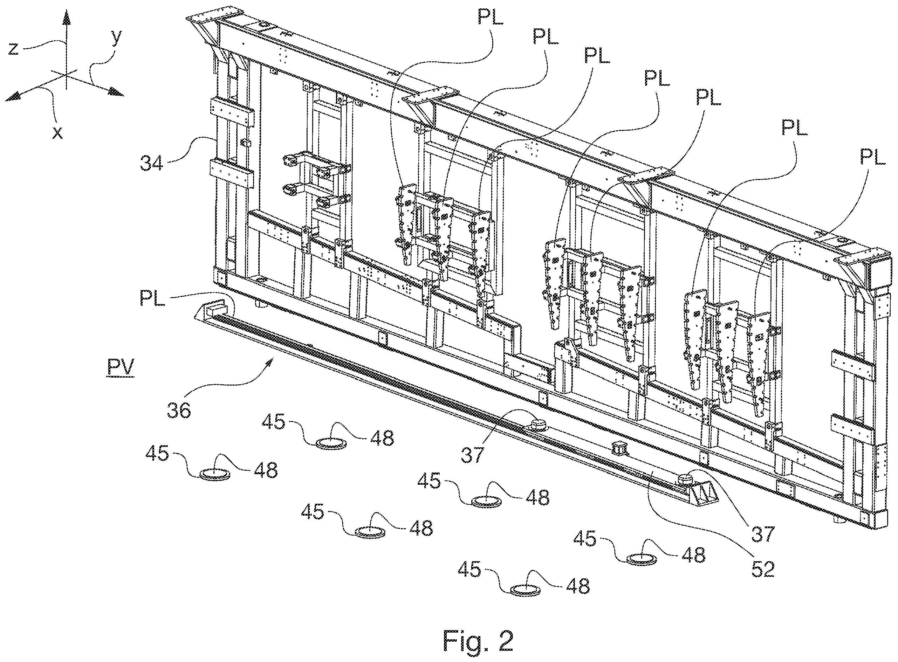

In the exemplary embodiment shown in Fig. 2, workpieces PL are ribs of aircraft flaps. Bores are to be drilled and tear rivets, known per se, are to be applied on workpieces PL. During such working operations, workpieces PL are fastened to and held in suitable positions on a piece holding jig 34 that, in the present example, consists of a vertical metal frame secured, for instance bolted, to workshop floor PV. During working, a plurality of ribs PL are fastened onto piece holding jig 34 so as to form a horizontal row, and working head 7 is to bore and rivet them by horizontally displacing along the row (Y direction in Figs. 1 and 2).

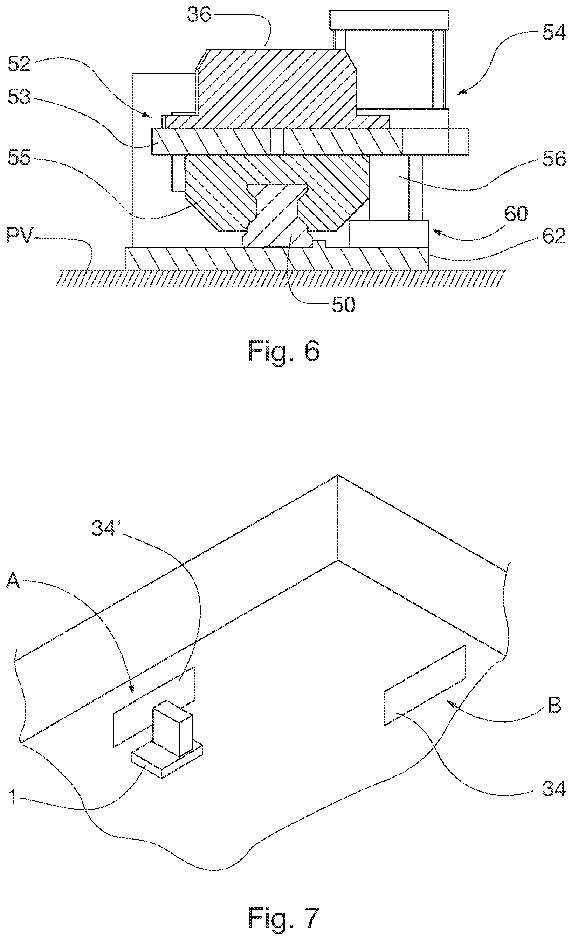

Advantageously, on workshop floor PV, in front or generally in proximity of piece holding jig 34, there is provided a workshop anchorage 36 that, in the present example, includes (Fig. 6):

- a sliding and anchorage rail or guide 50;
- an anchorage ram 52, mounted so as to be slidable along rail or guide 50.

Anchorage ram 52 includes a metal plate 53, a plurality of bearings 55 constraining plate 53 to rail 50 in the transverse directions to the sliding direction, and two vertically oriented anchorage pins 37, welded or screwed onto plate 53.

Rail 50 is fixedly secured, for instance by means of screws, to workshop floor PV and extends parallel to, or generally longitudinally with respect to piece holding jig 34 (in Y direction in Figs. 1 and 2).

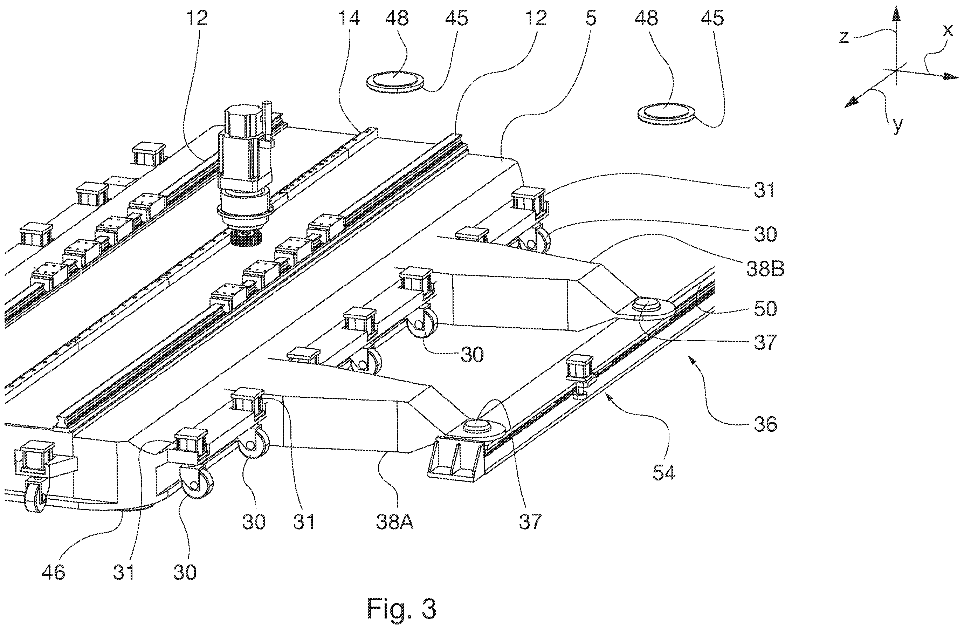

Anchorage ram 52 can be manually made to slide along fixed guide 50, and can be locked along the guide at predetermined positions by means of a reference lock 54 (Figs. 3, 6). In the present exemplary embodiment, such a reference lock 54 comprises an extensible pin 56 operated by a pneumatic cylinder, and a plurality of female seats 60 arranged to engage pin 56. Female seats 60 are stationary relative to the workshop floor and are formed on a plate 62 located below and secured to rail or guide 50 (Fig. 6).

Movable unit 1 is equipped with a corresponding on-board anchorage system 38 (Fig. 1) arranged to be secured to workshop anchorage 36. On-board anchorage system 38 includes two movable arms 38A, 38B at the ends of which two locking eyelets 40 are formed, each arranged to fit onto a pin 37 (Fig. 3) with possibly limited coupling tolerances.

Referring in particular to Fig. 7, a possible exemplary operation of movable unit 1 and piece holding jig 34 is now described.

It is assumed that the movable working unit has ended a first working operation in a first workshop area "A", near a piece holding jig 34', and is to perform a second working operation in a second workshop area "B", near a second piece holding jig 34.

The workshop, in the present example, is a shed with rectangular plan in which aircraft components with relatively large size, such as for instance portions of wings, flaps or fuselage, are assembled, and thus it will have a relatively large size, with a side length of the order of 100 to 300 m.

Movable working unit 1 is set to a suitable transport mode, with mechanical manipulator 3 in a suitable safety position.

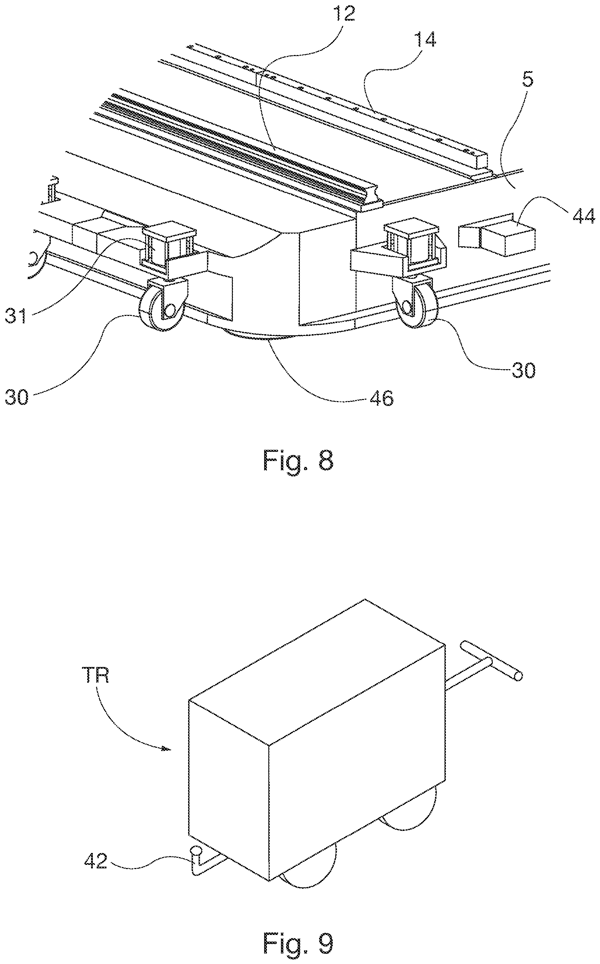

Pneumatic bumper 32 is inflated with compressed air from the workshop distribution network and, similarly, pneumatic cylinders 31 of wheels 30 are extended so as to raise the handling trolley and to make it rest only on wheels 30. Thanks to the fast connectors, unit 1 is disconnected from the electric and fluidic supply networks of the workshop. As shown in Fig. 8, in the present exemplary embodiment handling trolley 5 is equipped with two towing hooks 44, one of which is located on the front side and the other on the back side of the trolley. Unit 1 is then attached to two manually-driven, motor-operated tractors TR (Fig. 9), of which one is attached to the front towing hook 44 of handling trolley 5, and the other is attached to the back towing hook 44 of handling trolley 5, through corresponding hooks 42 on tractors TR. Each tractor TR is driven by an operator who walks after the tractor.

Displacing movable unit 1 by means of two tractors TR, one in front and the other behind the unit, is easier and safer, inside a workshop, than displacing it by means of a single tractor, and reduces to a minimum damages to persons, as well as to generally very expensive unfinished products and manufacturing equipment. Driving the unit by means of a human operator allows considerably cutting the system complexity and costs with respect to self-propelled trolley systems with completely automatic drive, without human assistance, since very complex and expensive electronic systems or the possible laying of magnetic guides under the workshop floor are dispensed with. According to the inventor, thanks to the drive by a human operator, the above-described plant can attain higher production rates than the known plants, using trolleys with wholly automatic drive. Once the working station of destination (station "B" in Fig. 7) has been reached, handling trolley 5 is made to rest again on the workshop floor, by discharging pneumatic suspensions 31 and retracting wheels 30, and pneumatic bumper 32 is deflated.

Advantageously, levelling supports 45 (Figs. 2, 3), in the form of support discs or generally of support plates bolted or cemented in the workshop floor, have been previously provided on the workshop floor, at working station "B".

A plurality of levelling supports 45, preferably at least three supports, are secured to workshop floor PV so that their top bearing surfaces 48 are as far as possible coplanar and preferably horizontal. In the embodiment shown in Figs. 1 to 9, six coplanar supports 45 are embedded in floor PV at working station "B" and are arranged along two rows so as to form two identical rectangular meshes (Fig. 2). Other six supports 46, in the form of discs or generally of plates, are arranged on the bottom face of handling trolley 5, at positions corresponding to floor supports 45 (Figs. 3, 8). Also the bottom bearing surfaces of trolley supports 46 are as far as possible coplanar. This allows making movable unit 1 rest on the floor by aligning the different elements of unit 1 with high precision relative to a horizontal and/or vertical direction, thereby contributing to the working precision.

Once handling trolley 5 has been made to rest on floor levelling supports 45, both anchorage arms 38A, 38B are lowered by a rotary, translational or rotary-translational movement, thereby inserting eyelets 40 onto anchorage pins 37 (Fig. 3): in this manner, movable unit 1 is mechanically anchored to the workshop floor and firmly and precisely locked relative to piece holding jig 34.

The operators who have transported movable unit 1 then start the automatic working procedure. Based on the spatial position of workpieces PL, the logic unit defines its own system of spatial (Cartesian or orthogonal) coordinates which it will use during working. In order to simplify such a procedure, the logic unit can detect the spatial position of suitable localised references, such as rivets, holes or calibration marks, previously provided on each workpiece PL. Then, movable working unit 1 performs, in automatic mode, a first group of working operations on a first group of workpieces PL, for instance a series of boring operations and the application of a plurality of rivets. Once such a first group of working operations is over, both anchorage arms 38A, 38B are raised and disengaged from anchorage pins 37. Pin 56 of reference lock 54 is disengaged from female seat 60 (Fig. 6) and anchorage ram 52 is made to slide, for instance by hand, as long as pin 56 is brought in correspondence of a second female seat 60, it too formed on stationary plate 50. In the present exemplary embodiment, ram 52 is manually made to slide over a stroke CM of about 4 m, equal to the maximum horizontal stroke CA by which working head 7 can move thanks to the only strokes of rams 9, 15 and 17 of manipulator 3. Of course, in other embodiments, manual stroke CM of anchorage ram 52 and pins 37 may be shorter, or even many times longer, than the maximum horizontal stroke of working head 7. Anchorage ram 52 is then locked in the new position by acting again on reference lock 54.

By the automatic procedure described above, movable unit 1 defines again said system of reference spatial coordinates, based on the spatial position of the second group of workpieces PL. Thereafter, unit 1 performs, in automatic mode, a second group of working operations, for instance another series of boring operations and the application of a plurality of rivets, on the second group of workpieces PL.

Once the second group of working operations is over, movable working unit 1 can be moved away from the second working area "B" in the workshop and transported elsewhere by means of tractors TR to perform other working operations.

The mechanical anchorage system of which workshop anchorage 36 and arms 38A, 38B are part allows positioning movable unit 1 with considerable precision near workpieces PL fastened on piece holding jig 34. Said anchorage system also allows a very fast positioning of unit 1 relative to piece holding jig 34. Moreover, the possibility of displacing anchorage pins 37 by making them slide along guide 50 secured to the floor and by precisely positioning them again in two or more different working positions, allows working head 7 to perform working operations on a wider area than allowed by the only strokes of the rams of mechanical manipulator 3 on which head 7 is mounted, with a consequent reduction of costs, since anchorage guides 50 can be made with lower costs than guides 12 mounted on board the movable working unit.

Also the possibility of transporting manipulator 3 and working head 7 on a trolley movable on wheels arranged to roll over a floor without rails or guides assists in enabling a considerable reduction in the costs of the plant, since it eliminates the need to install guides or bridge cranes extending over the whole surface of the workshop or factory.

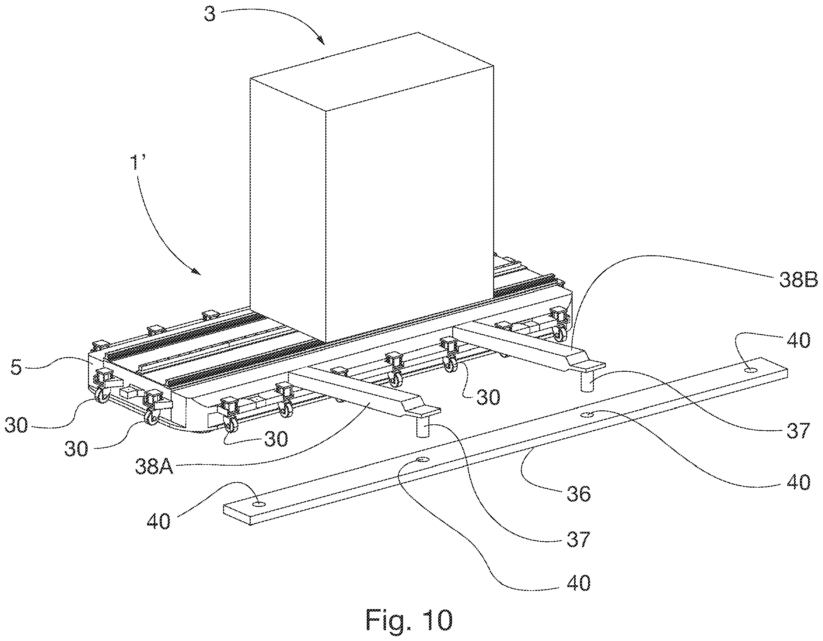

Fig. 10 relates to a second embodiment of the present invention, in which workshop anchorage 36' consists of a beam on which there are formed a plurality of positioning holes 40' arranged in a line along the beam itself, whereas a positioning pin 37' is provided on each arm 38A', 38B'. Movable working unit 1' can be positioned at a finite number of positions along beam 40' by introducing each pin 37' in a hole 40'.

The exemplary embodiments described above can undergo several changes and modifications. For instance, moving arms 38A, 38B, instead of being permanently mounted on board the trolley and reversibly engaging workshop anchorage 36, can be a permanent part of said anchorage 36 and reversibly engage anchorage pins permanently mounted on handling trolley 5. The movable working unit and the workshop anchorage can be reversibly connected not only by means of pin/hole couplings as described above, but also by means of different kinds of male/female couplings and/or fixed joints and/or hooking couplings, as well as by means of friction couplings or magnetic or fluidic couplings.

## Claims

1. Equipment for mechanical working provided with a movable working unit (1;1') which in turn comprises:

   - a mechanical manipulator (3);
   - a working head (7) mounted on the mechanical manipulator (3);
   - a handling trolley (5) supporting the mechanical manipulator (3), wherein the handling trolley (5) is arranged to transport the mechanical manipulator (3) to a plurality of working stations (A, B) **characterised in that** the working unit further comprises a sliding guide (11A, 11B, 12) and wherein the mechanical manipulator (3) comprises one or more sliding rams (9, 15, 17) slidably mounted on the guide (11A, 11B, 12) and arranged to move the working head (7) by means of their sliding movement.

2. Equipment according to claim 1, wherein the handling trolley (5) is provided with a plurality of bearing and sliding wheels (30) on a pavement (PV) and wherein at least some of the wheels (30) are provided with a load limiting device (31), adapted to cause each of said wheels (30) to reversibly yield when the load on said wheel exceeds a predetermined threshold value.

3. Equipment according to claim 1 or 2, wherein the handling trolley is provided with a bumper (32) arranged for protecting one or more sides of the trolley from impacts against external bodies, wherein the bumper (32) comprises an internal cavity filled with pressurized air or other pressurized gas.

4. Equipment according to one or more of the preceding claims, further comprising a plurality of levelling supports (45) external to the movable working unit (1;1') and provided for supporting the latter correctly aligned with respect to the horizontal and vertical planes during working, each of the levelling supports (45) defining a bearing surface (48) provided for bearing against and supporting the handling trolley (5).

5. Equipment according to one or more of the preceding claims, further comprising a piece holding jig (34) provided for receiving and holding at a predetermined position one or more pieces (PL) to be worked while the movable working unit (1;1') carries out a working operation thereon, wherein the movable working unit (1;1') comprises an on-board anchorage (38, 38A, 38B) provided for reversibly securing the movable working unit (1;1') to one or more workshop anchorages (36, 50, 52) outside the unit (1;1'), so as to secure the relative positions of the movable working unit (1;1') and of the piece holding jig (34) during working.

6. Equipment according to claim 5, wherein the on-board anchorage (38) comprises one or more movable arms (38A and 38B) provided with an element chosen among the group consisting of an anchoring slot or pin, a hook, a spike, an anchoring tooth, a pole of a magnetic or electromagnetic circuit.

7. Equipment according to claim 5 or 6, wherein the workshop anchorage (36, 50, 52) comprises a fixed guide of anchorage (50) and a ram of anchorage (52) slidably fixed to the guide of anchorage (50), wherein the ram of anchorage (52) is provided for engaging the on-board anchorage (38, 38A, 38B) so as to secure the relative positions of the movable working unit (1;1') and of the piece holding jig (34) during working.

8. Method for mechanical working, comprising the following operations:

- providing within a workshop a movable working unit (1;1') according to one or more of claims 1 to 7;
- moving, by means of a human driver driving a motorized tractor (TR) external to the movable working unit (1;1'), the movable working unit (1;1') from a first zone (A) of the workshop to a second zone (B) of the workshop, wherein the motorized tractor (TR) can be reversibly associated to and separated from the movable working unit (1;1').

9. Method according to claim 8, wherein the following operations are further provided:

- providing a fixed workshop anchorage ((36, 50, 52) external to the movable working unit (1;1');
- providing a piece holding jig (34) provided for receiving and holding at a predetermined position one or more pieces (PL) to be worked while the movable working unit (1;1') carries out a working operation thereon;
- reversibly fixing the movable working unit (1;1') to the workshop anchorage (36, 50, 52);
- carrying out, by means of the movable working unit (1;1'), a working operation on one or more pieces (PL) to be worked held by the piece holding jig (34).

10. Method according to claim 9, wherein the following operations are further provided:

- reversibly fixing the movable working unit (1;1') to the ram of anchorage (52);
- carrying out, by means of the movable working unit (1;1'), a first working operation on a first group of pieces (PL) to be worked held by the piece holding jig (34);
- moving the ram of anchorage (52) along the guide of anchorage (50) while maintaining the movable working unit (1;1') fixed to said ram (52);
- carrying out, by means of the movable working unit (1;1'), a second working operation on a second group of pieces (PL) to be worked held by the piece holding jig (34).

**Patentansprüche**

1. Vorrichtung zur mechanischen Bearbeitung mit einer beweglichen Arbeitseinheit (1; 1'), die wiederum enthält:

- einen mechanischen Manipulator (3),
- einen Bearbeitungskopf (7), der an dem mechanischen Manipulator (3) montiert ist,
- einen Transportwagen (5), der den mechanischen Manipulator (3) trägt, wobei der Transportwagen (5) dafür vorgesehen ist, den mechanischen Manipulator (3) zu mehreren Arbeitsstationen (A, B) zu transportieren,

**dadurch gekennzeichnet, dass** die Arbeitseinheit zudem eine Gleitführung (11A, 11B, 12) aufweist und der mechanische Manipulator (3) einen oder mehrere verschiebbare Schlitten (9, 15, 17) aufweist, die verschiebbar an der Führung (11A, 11B, 12) montiert sind und dazu vorgesehen sind, den Bearbeitungskopf (7) mittels ihrer Verschiebebewegung zu bewegen.

2. Vorrichtung nach Anspruch 1, wobei der Transportwagen (5) mit mehreren tragenden und ausziehbaren Rädern (3) auf einem Belag (PV) versehen ist und wobei wenigstens einige der Räder (30) mit einer Lastbegrenzungsvorrichtung (31) versehen sind, die dafür ausgelegt ist, jedes der Räder (30) reversibel nachgeben zu lassen, wenn die Last auf diesem Rad einen vorgegebenen Schwellenwert übersteigt.

3. Vorrichtung nach Anspruch 1 oder 2, wobei der Transportwagen mit einem Stoßfänger (32) versehen ist, der dafür vorgesehen ist, eine oder mehrere Seiten des Transportwagens vor Zusammenprall mit externen Körpern zu schützen, wobei der Stoßfänger (32) einen inneren Hohlraum aufweist, der mit Druckluft oder anderem unter Druck stehendem Gas gefüllt ist.

4. Vorrichtung nach einem oder mehreren der vorstehenden Ansprüche, die zusätzlich mehrere Nivellierstützen (45) aufweist, die außerhalb von der beweglichen Arbeitseinheit (1; 1') angeordnet und dazu vorgesehen sind, letztere in Bezug auf die horizontalen und vertikalen Ebenen beim Bearbeiten korrekt ausgerichtet zu tragen, wobei jede der Nivellierstützen (45) eine Lastfläche (48) bildet, die dafür ausgelegt ist, gegen den Transportwagen (5) zu drücken und ihn zu tragen.

5. Vorrichtung nach einem oder mehreren der vorstehenden Ansprüche, die zusätzlich eine Teilehaltevorrichtung (34) aufweist, die dafür vorgesehen ist, ein oder mehrere Teile (PL) aufzunehmen und in einer vorgegebenen Position zu halten, während die bewegliche Arbeitseinheit (1; 1') an diesen eine Bearbeitung durchführt, wobei die bewegliche Arbeitseinheit (1; 1') eine eingebaute Verankerung (38, 38A, 38B) aufweist, die dafür vorgesehen ist, die bewegliche Arbeitseinheit (1; 1') reversibel an einer oder mehreren Werkstattankerplätzen (36, 50, 52) außerhalb der Einheit (1; 1') zu befestigen, so dass die relativen Positionen der beweglichen Arbeitseinheit (1; 1') und der Teilehaltevorrichtung (34) beim Arbeiten fixiert sind.

6. Vorrichtung nach Anspruch 5, wobei die eingebaute Verankerung (38) einen oder mehrere bewegliche Arme (38A und 38B) aufweist, die mit einem Element versehen sind, das aus der Gruppe ausgewählt ist, die aus einem Verankerungsschlitz oder -zapfen, einem Haken, einem Stift, einem Ankerzahn, einem Pol einer magnetischen oder elektromagnetischen Schaltung besteht.

7. Vorrichtung nach Anspruch 5 oder 6, wobei der Werkstattankerplatz (36, 50, 52) eine fixierte Verankerungsführung (50) und einen gleitend an der Verankerungsführung (50) angebrachten Verankerungsschlitten (52) aufweist, wobei der Verankerungsschlitten (52) dafür vorgesehen ist, die eingebaute Verankerung (38, 38A, 38B) zu fassen, um die relativen Positionen der beweglichen Arbeitseinheit (1; 1') und der Teilehaltevorrichtung (34) beim Arbeiten zu fixieren.

8. Verfahren zum mechanischen Bearbeiten, mit den folgenden Schritten:

- Bereitstellen einer beweglichen Arbeitseinheit (1; 1') nach einem oder mehreren der Ansprüche 1 bis 7 in einer Werkstatt;
- Bewegen der beweglichen Arbeitseinheit (1; 1') mittels eines menschlichen Fahrers, der einen motorbetriebenen Schlepper (TR), der nicht Teil der beweglichen Arbeitseinheit (1; 1') ist, fährt, von einer ersten Zone (A) der Werkstatt in eine zweite Zone (B) der Werkstatt, wobei der motorbetriebene Schlepper (TR) reversibel an die bewegliche Arbeitseinheit (1; 1') angekoppelt und von ihr getrennt werden kann.

9. Verfahren nach Anspruch 8, wobei zusätzlich die folgenden Schritte durchgeführt werden:

- Bereitstellen einer fixierten Werkstattverankerung (36, 50, 52), die nicht Teil der beweglichen Arbeitseinheit (1; 1') ist;
- Bereitstellen einer Teilehaltevorrichtung (34), die dazu vorgesehen ist, einen oder mehrere zu bearbeitende Teile (PL) aufzunehmen und in einer vorgegebenen Position zu halten, während die bewegliche Arbeitseinheit (1; 1') an ihnen einen Bearbeitungsvorgang durchführt;
- reversibles Fixieren der beweglichen Arbeitseinheit (1; 1') an der Werkstattverankerung (36, 50, 52);

- Durchführen eines Bearbeitungsvorgangs an einem oder mehreren zu bearbeitenden Teilen (PL), die von der Teilehaltevorrichtung (34) gehalten werden, mittels der beweglichen Arbeitseinheit (1; 1').

10. Verfahren nach Anspruch 9, wobei zusätzlich die folgenden Schritte durchgeführt werden:

- reversibles Fixieren der beweglichen Arbeitseinheit (1; 1') an dem Verankerungsschlitten (52);
- Durchführen eines ersten Bearbeitungsvorgangs an einer ersten Gruppe von zu bearbeitenden Teilen (PL), die von der Teilehaltevorrichtung (34) gehalten werden, mittels der beweglichen Arbeitseinheit (1; 1');
- Bewegen des Verankerungsschlittens (52) entlang der Verankerungsführung (50), während die bewegliche Arbeitseinheit (1; 1') an dem Schlitten (52) befestigt ist;
- Durchführen eines zweiten Bearbeitungsvorgangs an einer zweiten Gruppe von zu bearbeitenden Teilen (PL), die von der Teilehaltevorrichtung (34) gehalten werden, mittels der beweglichen Arbeitseinheit (1; 1').

**Revendications**

1. Equipement de travail mécanique pourvu d'une unité de travail mobile (1; 1') qui comprend quant à elle:

- un manipulateur mécanique (3);
- une tête de travail (7) montée sur le manipulateur mécanique (3) ;
- un chariot de manutention (5) supportant le manipulateur mécanique (3), dans lequel le chariot de manutention (5) est agencé pour transporter le manipulateur mécanique (3) jusqu'à une pluralité de postes de travail (A, B), **caractérisé en ce que** l'unité de travail comprend en outre un guide de coulissement (11A, 11B, 12) et dans lequel le manipulateur mécanique (3) comprend un ou plusieurs fourreaux coulissants (9, 15, 17) montés en coulissement sur le guide (11A, 11B, 12) et agencés pour déplacer la tête de travail (7) au moyen de leur mouvement coulissant.

2. Equipement selon la revendication 1, dans lequel le chariot de manutention (5) est pourvu d'une pluralité de roues d'appui et de coulissement (30) sur une chaussée (PV) et dans lequel au moins certaines des roues (30) sont pourvues d'un dispositif de limitation de charge (31), adapté pour amener chacune desdites roues (30) à céder de façon réversible lorsque la charge sur ladite roue dépasse une valeur seuil prédéterminée.

3. Equipement selon la revendication 1 ou 2, dans lequel le chariot de manutention est pourvu d'un pare-chocs (32) agencé pour protéger un ou plusieurs côtés du chariot vis-à-vis de chocs contre des corps externes, dans lequel le pare-chocs (32) comprend une cavité interne remplie d'air pressurisé ou d'un autre gaz pressurisé.

4. Equipement selon une ou plusieurs des revendications précédentes, comprenant en outre une pluralité de supports de mise à niveau (45) externes à l'unité de travail mobile (1 ; 1') et prévus pour supporter cette dernière correctement alignée par rapport aux plans horizontal et vertical pendant le travail, chacun des supports de mise à niveau (45) définissant une surface d'appui (48) prévue pour appuyer contre et supporter le chariot de manutention (5).

5. Equipement selon une ou plusieurs des revendications précédentes, comprenant en outre un montage de maintien de pièce (34) prévu pour recevoir et maintenir à une position prédéterminée une ou plusieurs pièces (PL) à travailler tandis que l'unité de travail mobile (1; 1') réalise une opération de travail sur celles-ci, dans lequel l'unité de travail mobile (1 ; 1') comprend un ancrage embarqué (38, 38A, 38B) prévu pour arrimer de façon réversible l'unité de travail mobile (1 ; 1') à un ou plusieurs ancrages d'atelier (36, 50, 52) à l'extérieur de l'unité (1 ; 1'), de façon à arrimer les positions relatives de l'unité de travail mobile (1 ; 1') et du montage de maintien de pièce (34) pendant le travail.

6. Equipement selon la revendication 5, dans lequel l'ancrage embarqué (38) comprend un ou plusieurs bras mobiles (38A et 38B) pourvus d'un élément choisi dans le groupe constitué d'une fente ou d'une broche d'ancrage, d'un crochet, d'une pointe, d'une dent d'ancrage, d'un pôle d'un circuit magnétique ou électromagnétique.

7. Equipement selon la revendication 5 ou 6, dans lequel l'ancrage d'atelier (36, 50, 52) comprend un guide fixe d'ancrage (50) et un fourreau d'ancrage (52) fixé en coulissement au guide d'ancrage (50), dans lequel le fourreau d'ancrage (52) est prévu pour engager l'ancrage embarqué (38, 38A, 38B) de façon à arrimer les positions relatives de l'unité de travail mobile (1 ; 1') et du montage de maintien de pièce (34) pendant le travail.

8. Procédé de travail mécanique, comprenant les opérations suivantes:

- la fourniture au sein d'un atelier d'une unité de travail mobile (1 ; 1') selon une ou plusieurs des revendications 1 à 7 ;
- le déplacement, au moyen d'un conducteur humain conduisant un tracteur motorisé (TR) externe à l'unité de travail mobile (1 ; 1'), de l'unité de travail mobile (1 ; 1') d'une première zone (A) de l'atelier à une seconde zone (B) de l'atelier, dans lequel le tracteur motorisé (TR) peut être associé de façon réversible à et séparé de l'unité de travail mobile (1; 1').

9. Procédé selon la revendication 8, dans lequel les opérations suivantes sont en outre prévues:

- la fourniture d'un ancrage d'atelier fixe (36, 50, 52) externe à l'unité de travail mobile (1 ; 1');
- la fourniture d'un montage de maintien de pièce (34) prévu pour recevoir et maintenir à une position prédéterminée une ou plusieurs pièces (PL) à travailler tandis que l'unité de travail mobile (1 ; 1') réalise une opération de travail sur celles-ci ;
- la fixation réversible de l'unité de travail mobile (1 ; 1') à l'ancrage d'atelier (36, 50, 52) ;
- la réalisation, au moyen de l'unité de travail mobile (1 ; 1'), d'une opération de travail sur une ou plusieurs pièces (PL) à travailler maintenues par le montage de maintien de pièce (34).

10. Procédé selon la revendication 9, dans lequel les opérations suivantes sont en outre prévues:

- la fixation réversible de l'unité de travail mobile (1 ; 1') au fourreau d'ancrage (52) ;
- la réalisation, au moyen de l'unité de travail mobile (1 ; 1'), d'une première opération de travail sur un premier groupe de pièces (PL) à travailler maintenues par le montage de maintien de pièce (34) ;
- le déplacement du fourreau d'ancrage (52) le long du guide d'ancrage (50) tout en conservant l'unité de travail mobile (1; 1') fixée audit fourreau d'ancrage (52) ;
- la réalisation, au moyen de l'unité de travail mobile (1 ; 1'), d'une seconde opération de travail sur un second groupe de pièces (PL) à travailler maintenues par le montage de maintien de pièce (34).

Fig. 1

EP 2 461 947 B1

Fig. 2

EP 2 461 947 B1

Fig. 3

EP 2 461 947 B1

5

45

PV

30    30    30    30    30

Fig. 4A

5

PV

30    30    30

Fig. 4B

5

PV

30    30         30

Fig. 4C

Fig. 5

Fig. 6

Fig. 7

Fig. 8

Fig. 9

Fig. 10

EP 2 461 947 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4887016 A

- EP 1884313 A